# EUROPEAN PATENT SPECIFICATION

(11) **EP 1 892 926 B1**
(45) Date of publication and mention of the grant of the patent: **26.08.2009**
(21) Application number: 07121700.4
(22) Date of filing: 24.12.2004
(51) Int. Cl.: H04L 29/08

(54) **Tailoring Content for Mobile Electronic Device Based on Network**
Auf einem Netzwerk basierte Anpassung von Inhalten für ein elektronisches Mobilgerät
Contenu de personnalisation pour dispositif électronique mobile basé sur un Réseau

(43) Date of publication of application: 27.02.2008
(62) Divisional of application: 04106978.2
(73) Proprietor: Research In Motion Limited, Waterloo, Ontario N2L 3W8 (CA)
(72) Inventor: Brown, Michael K, Kitchener Ontario N2M 2Z2 (CA); Nagy, Tom, Waterloo Ontario N2L 2N4 (CA)
(74) Representative: Rickard, David John

(56) References cited:
- EP-A- 1 207 655
- WO-A-02/29597
- US-A1- 2002 016 818
- US-A1- 2002 059 333
- US-A1- 2003 156 543
- US-A1- 2004 174 853

## Description

The present application relates generally to preparing content for delivery to mobile electronic devices.

The downloading experience between a wireless enabled mobile electronic device and a content source greatly depends on the communications channel between the mobile electronic device and the content source. For example, wireless devices used within a packet based cellular wireless wide area network, such as a GPRS network, for example, typically have a relatively limited bandwidth available to them such that downloading rich content may be a slow, frustrating and expensive experience. Conversely, a wireless device used within a Wi-Fi network, for example an 802.11 network, will typically have much greater bandwidth available to it such that downloading rich content is relatively fast.

US2004174853 discloses a wireless communication and content control system, whereby the quality of content to be delivered is modified in accordance with available bandwidth.

US2002/059333 discloses a system in which a web page is modified by removing all graphical data and replacing such data by icons prior to transmission of the modified web page.

### GENERAL

According to example aspects of the invention, downloadable content such as Internet web pages and email messages may be tailored prior to transmission to the mobile electronic device based on the wireless network that the content is being sent over.

In one aspect, the present application may provide a method for facilitating the adaptation of data for transmission to a mobile electronic device by a data conversion device in a wireless connector system, said method comprising the steps at said mobile electronic device: selecting a downlink network from among a plurality of networks, advising said data conversion device of an identity of said downlink network, transmitting to said wireless connector system a request for content, and receiving, over the downlink network responsive to the request, a portion of the content, where the portion of the content has been selected by the data conversion device based on the downlink network.

In another aspect, the present application may provide a mobile electronic device comprising: a first network subsystem for facilitating communication over a first wireless network; a second network subsystem for facilitating communication over a second wireless network; a processor adapted to: select a downlink network from among said first wireless network and said second wireless network; advise a data conversion device of an identity of said downlink network, use one of said first wireless network and said second wireless network to transmit, to a wireless connector system, a request for content; and receive, over said downlink network responsive to said request, a portion of said content, where said portion of said content has been selected by said data conversion device based on said downlink network.

In another aspect, the present application may provide a method of transmitting adapted data from a data conversion device in a wireless connector system to a mobile electronic device, said method comprising the steps at the data conversion device of: receiving a selection of a downlink network from among a plurality of networks, said selection advising of an identity of said downlink network; receiving a request for content from said mobile electronic device; selecting a portion of said content based on said downlink network; and transmitting said selected portion of content to said mobile electronic device, over said downlink network responsive to said received request.

In another aspect, the present application may provide a data conversion device in a wireless connector system for transmitting adapted data to a mobile electronic device, said data conversion device comprising: means for receiving a selection of a downlink network from among a plurality of networks, said selection advising of an identity of said downlink network; means for receiving a request for content from said mobile electronic device; means for selecting a portion of said content based on said downlink network; and means for transmitting said selected portion of content to said mobile electronic device, over said downlink network responsive to said received request.

In another aspect, the present application may provide a computer readable medium storing program code executable by a processor of a computing device, said program code when being executed causing said computing device to perform the steps of one or both of the foregoing methods.

In the method the first wireless network may be a cellular wireless wide area network (WAN) and the second wireless network is a wireless local area network (WLAN), the wireless WAN having a slower downlink speed to the mobile electronic device than the WLAN, wherein adapting the content when the selected wireless network is the wireless WAN comprises removing information from the content to reduce the size thereof.

The method may comprise adapting the content when the selected wireless network is the WLAN comprises removing information from the content to reduce the size of thereof, the size of information removed when the selected wireless network is the WLAN being less than the size of information removed than if the selected wireless network is the wireless WAN.

The method may comprise determining if the selected wireless network is the WLAN, and if so, sending the content without adapting the content to reduce the size thereof.

In the method the content may comprise information for generating a web page, the information comprising reference files and a computer instruction file comprising instructions for generating the web page, the instructions comprising references to the references files, wherein adapting the content when the selected wireless network is the wireless WAN comprises deleting at least some of the reference files from the content.

In the method the reference files may comprise video files, wherein adapting the content when the selected wireless network is the wireless WAN comprises deleting the video files from the content.

The method may comprise adapting the content when the selected wireless network is the wireless WAN comprises deleting from the content the reference files that are predetermined file types and exceed a predetermined file size.

In the method the content may comprise information for generating a web page, the information comprising at least one image file for generating an associated image and a computer instruction file comprising instructions for generating the web page, the instructions referencing the image file, wherein adapting the content when the selected wireless network is the wireless WAN comprises converting the image file to a lower resolution image file.

In the method the content may comprise information for generating a web page, the information comprising image files for generating associated images and a computer instruction file comprising instructions for generating the web page, the instructions referencing the image file, wherein adapting the content when the selected wireless network is the wireless WAN comprises determining which of the image file exceed a predetermined size and converting the determined image files to a lower resolution image file.

In the method the content may comprise an email message, wherein adapting the content when the selected wireless network is the wireless WAN comprises converting the email message to a plain text email message.

In the method when the selected wireless network is the WLAN, the email message-may not be converted to a plan text email message prior to sending to the mobile electronic device.

In the method the content may comprise an email message having an attachment, wherein adapting the content when the selected wireless network is the wireless WAN comprises removing the attachment from the email message.

In the method the selected wireless network is the WLAN, the email message is sent with the attachment to the mobile electronic device.

In the method the wireless WAN may comprise a cellular network compatible with at least one of GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EDGE (Enhanced Data rates for GSM Evolution) and UMTS (Universal Mobile Telecommunications Systems); and the WLAN is compatible with IEEE 802.11.

In the system the content may comprise information for generating a web page, the information comprising reference files and a computer instruction file comprising instructions for generating the web page, the instructions comprising references to the references files, wherein the data conversion means is configured to adapt the content when the selected wireless network is the wireless WAN by deleting at least some of the reference files from the content.

In the system the data conversion means may be configured to adapt the content when the selected wireless network is the wireless WAN by deleting from the content the reference files that are predetermined file types and exceed a predetermined file size.

In the system the content may comprise an email message, wherein the data conversion means is configured to adapt the content when the selected wireless network is the wireless WAN by converting the email message to a plain text email message.

In the system the content may comprise an email message, wherein the data conversion means is configured to adapt the content when the selected wireless network is the wireless WAN by removing the attachment from the email message.

### BRIEF DESCRIPTION OF THE DRAWINGS

Embodiments will now be described, by way of example only, with reference to the attached Figures, wherein:
Figure 1 is a block diagram of a communications system to which embodiments may be applied;
Figure 2 is a block diagram of a method for processing a web page according to example embodiments of the invention;
Figure 3 is a block diagram of a method for processing an email message according to example embodiments of the invention; and
Figure 4 is a block diagram showing an example of a mobile electronic device that can be used in the communications system of Figure 1.

Like reference numerals are used throughout the Figures to denote similar elements and features.

### DESCRIPTION OF PREFERRED EMBODIMENTS

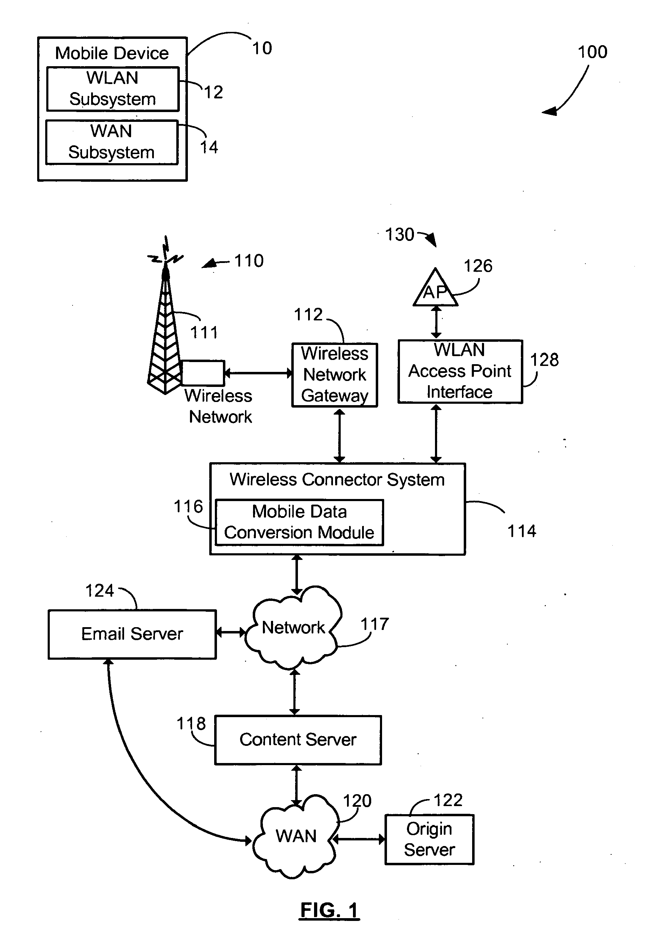

Referring first to Figure 1, there is a block diagram of a communication system 100 according to at least one example embodiment of the present invention. The communication system 100 includes mobile electronic devices 10 (only one of which is shown in Figure 1), a wireless wide area network (WAN) 110 and a wireless local area network (WLAN) 112.

Wireless WAN 110, in at least some example embodiments, is a packet-based cellular network that includes a plurality of base stations 111 (one of which is shown in Figure 1) that each provide wireless RF coverage to a corresponding area or cell. Wireless WAN 110 will typically be operated by a cellular network service provider that sells subscription packages to users of mobile electronic devices. Wireless WAN 110 could be a number of different types of network including by way of non-limiting example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution) or UMTS (Universal Mobile Telecommunications Systems).

The communications system 100 also includes a wireless network gateway 112 and a wireless connector system 114. The wireless network gateway 112 provides translation and routing services between one or more wireless connector systems 114 and WANs 110 to facilitate communication between mobile electronic devices 10 and devices connected, directly or indirectly, to wireless connector system 114.

WLAN 130 in at least some example embodiments conforms to IEEE 802.11 standards, for example 802.11b and/or 802.11g, however other communications protocols could also be used for WLAN 130. As known in the art, WLAN 130 includes a plurality of wireless radio frequency (RF) access points (AP) 126 (one of which is shown in Figure 1) that collectively provide a WLAN coverage area. In an example embodiment, WLAN 130 is operated by an enterprise (such as a business or university, for example) and access points 126 are connected to an access point (AP) interface 128. The AP interface 128 provides translation and routing services between access points 126 of WLAN 130 and wireless connector system 114 to facilitate communication between mobile electronic devices 10 and devices connected, directly or indirectly, to wireless connector system 114. The AP interface 128 may be implemented by a computer such as a server running a suitable software program.

The wireless connector system 114 is a server that, in at least some examples, is located behind a firewall and provides access for mobile electronic devices 10, through either wireless WAN 110 or WLAN 130, to the devices connected, for example, through an enterprise network such as an intranet 117, to the wireless connecter system 114. The wireless connector system 114 includes a mobile data conversion module 116 that adapts content and information received from devices connected to wireless connector system 114 for transmission over wireless WAN 110 or WLAN 130 to mobile electronic devices 10. As will be explained in greater detail below, the mobile data conversion module 116 selectively adapts the content being sent to the mobile electronic device 10 based on whether the content is being sent over wireless WAN 110 or WLAN 130. In at least one embodiment, the data conversion module 116 is implemented through computer program instructions that reside on a persistent storage on the wireless connector system 114, and which are executed by one or more microprocessors. In some embodiments, the data conversion module 116 could be implemented on a separate computer than the other components of wireless connector system 114.

The enterprise network 117 may include a local area network, an intranet, the Internet, a direct connection, and combinations thereof, however in at least some example embodiments enterprise network 117 will be an intranet for a corporation or organization. An application/content server 118 may be connected to the client network 117 and also to a further network such as a Wide Area Network (WAN) 120. The WAN 120 may connect with other networks, and the WAN 120 can in various embodiments include the Internet, a direct connection, a local area network (LAN), a wireless communication link, and any combinations thereof. Content providers, such as web servers, may be connected to the WAN 120, an example of which is shown in Figure 1 as origin server 122. An email server 124 is in at least one configuration connected to the enterprise network 117. The email server 124 is configured to direct or redirect email messages received over WAN 120 and internally within enterprise network 117 to addressed mobile electronic devices 10.

In an example embodiment, the data conversion module 116 provides HTTP connectivity between the wireless WAN 110 and WLAN 130 and devices and/or networks connected directly or indirectly to wireless connector system 114. The network 117, application/content server 118, WAN 120 and origin server 122 are collectively and/or individually or in various combinations a content source for the wireless connector system 114. The system shown in Figure 1 is but one possible configuration for a communications system on which embodiments of the invention may be implemented.

In one example embodiment, mobile electronic devices 10 are handheld two-way mobile communication devices 10 having at least data and possibly also voice communication capabilities. In an example embodiment, the devices 10 have the capability to communicate with other computer systems on the Internet. In various embodiments, mobile electronic devices 10 may include, by way of non limiting example, data communication devices, multiple-mode communication devices configured for both data and voice communication, mobile telephones, mobile communication devices, PDAs enabled for wireless communications, and wireless modems operating in conjunction with computer systems.

In the presently described embodiment, mobile electronic device 10 is configured to operate within the wireless WAN 110 and the WLAN 130 and in this regard includes a WAN communications subsystem 14 for communicating with wireless WAN 110 and a WLAN communications subsystem 12 for communicating with access points 126 of WLAN 130. Wireless WAN 110 and WLAN 130 have coverage areas that at least partially overlap. In at least some example embodiments, the coverage area of wireless WAN 110 is much larger than that of WLAN 130 and may overlap all or a large percentage of the coverage area of WLAN 130. However, WLAN 130 may have sole coverage in some regions that are dead spots in wireless WAN 110, for example, some interior locations of an enterprise's buildings. Typically, the channel resources such as bandwidth available for providing content to a mobile electronic device 10 will be greater through WLAN 130 than through wireless WAN 110.

In example embodiments, the mobile electronic device 10 is configured to communicate over WLAN 130 when within the coverage area of WLAN 130, and over wireless WAN 110 when outside of the coverage area of WLAN 130 and inside the coverage area of wireless WAN 110. Such a configuration, among other things, allows the mobile electronic device 10 to take advantage of the larger bandwidth available through WLAN 130 than wireless WAN 110.

According to example embodiments of the invention, content received by the data conversion module 116 that is destined for a mobile electronic device is adapted based on the wireless network that content is being sent over to the mobile electronic device 10.

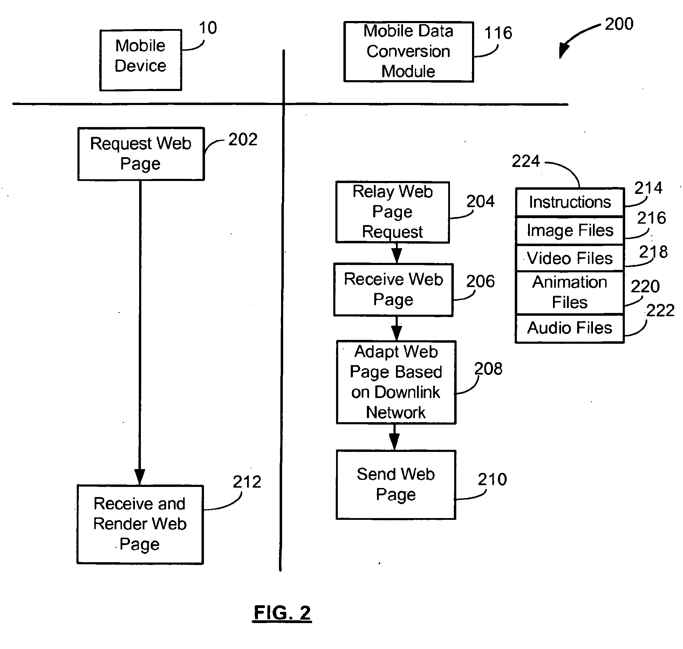

Figure 2 provides a block diagram overview showing method 200 for processing a Web page according to example embodiments of the invention. In the method 200, as indicated in step 202, a mobile electronic device 10 having a Web browser transmits a web page request over the wireless network that it is currently using to communicate with wireless connector system 114, namely either wireless WAN 110 or WLAN 130. As known in the art, the information needed for rendering a Web page 224 will typically include an instruction file 214 and possibly associated image files 216, video files 218, animation files 220 and/or audio files 222. The instruction file may be an HTML file which defines the structure and layout of a Web document by using a variety of tags and attributes, which, in turn, refer to image files 216, video files 218, animation files 220 and audio files 222. Image files could include for example, PNG graphics files or different graphic file formats such as JPEG or GIF for example. Video and/or animation files could include flash or MPEG files, among other formats, and audio files could include MP3 files, among other formats.

Turning again to Figure 2, the web page request from mobile electronic device 10 is routed through either wireless WAN 110 or WLAN 130 to the data conversion module 116 of wireless connector system 114. As indicated in step 204, the data conversion module 116 relays the web page request to the source of the web page. In one example, the web page request may be routed through client network 117, application/content server 118, and Internet 120 to an origin server 122 on which the requested web page resides. In some examples, the application/content server 118 or another server connected to the data conversion module 116 through client network 117 could be the origin server. As indicated in step 206, the data conversion module 116 receives the requested web page, including the HTML file 124 and any referenced image, video, animation and/or audio files.

As indicated in step 208, once the data conversion module 116 receives the requested web page, the data conversion module 116 adapts the web page based on the network (wireless WAN 110 or WLAN 130) that will be used as the downlink channel when the web page is sent over to the requesting mobile electronic device 10. In one example embodiment, the mobile electronic device 10 is configured to advise the data conversion module 116 when, or prior to, making the web page request what network will be used as the downlink network. The mobile electronic device 10 can derive this information based on the current network that it is using for wireless communications. In other embodiments, the wireless connector system 114 tracks what network is being currently used for wireless communications with the mobile electronic device 10, and passes that information onto the data conversion module 116 either with the web page request when it is received from the mobile electronic device 10, or in reply to an inquiry from the data conversion module 116.

When adapting the web page, the data conversion module adapts the web page to accommodate for the resources, for example channel bandwidth, available on the network 110 or 130 that is to be used for the downlink. For example, in one embodiment, if the downlink network is the higher speed WLAN 130, the web page content 224 is generally unaltered by the data conversion module 116 and is left substantially or completely as received from the content source. Thus, in some embodiments, there will be situations where the data conversion module 116 determines, based on the downlink network, that the web page does not need to be adapted and sends the unadapted web page out.

However, if the downlink network is the slower speed wireless WAN 110, then the size of the web page content 224 is pared down to speed up its transmission time. For example, in one embodiment, the data conversion module 116 removes selected files from the web page content 224. For example, in one configuration, all video, animation and audio files 218, 220 and 222 are removed from web page content 224. In other configurations, video animation and/or audio files 218, 220 and 222 above predetermined file sizes are deleted. The threshold sizes may be set according to file type. In some configurations, image files 216 are also deleted, and in some configurations, image files 216 above a certain threshold size are deleted. In some example embodiments, image files 216 are converted to lower resolution images in order to reduce file size.

In one example, the instruction file (e.g. HTML (Hypertext Markup Language) source code) 214 is amended by data conversion module 116 to remove references to the deleted content. In another alternative configuration, the browser on the device 10 is configured (for example, through a plug in) to ignore references to certain file types in the instruction file 214 when a web page is loaded over the slower wireless WAN 110, in order to take into account that such files have been removed back at the data conversion module 116.

As indicated above, in some embodiments, the mobile data conversion module 116 leaves web page content that is going to be sent over WLAN 130 unamended. In some other example embodiments, a more limited set of changes may be done for web pages that are transmitted over WLAN 130 than wireless WAN 110. For example, the threshold sizes for deleting video, animation and/or audio files may be higher for WLAN 130 than wireless WAN 110.

Referring again to Figure 2, as indicated in step 210, once the requested web page has been processed by the data conversion module 116, the processed web page is then sent over the appropriate wireless network 110 or 130 to the requesting mobile electronic device 10. As indicated in step 212, device 10 then renders the received web page on its display screen.

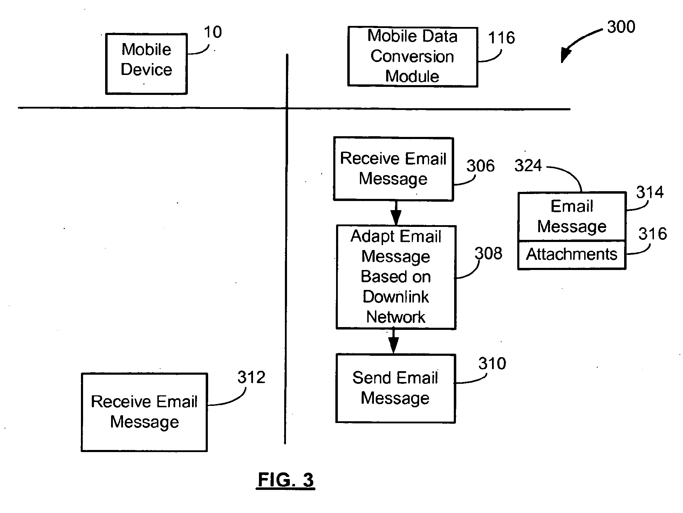

The network-based content adapting methods described herein can also be applied to other content downloaded to a device 10, including, for example, email messages. Figure 3 shows a method 300 used by data conversion module 116 when adapting an email message. Method 300 is similar to method 200 described above, with differences that will be apparent based on the following description. As indicated in step 306, the data conversion module 116 receives an email message destined for a specific mobile electronic device 10. In some embodiments, email messages are automatically pushed out from email server 124 to mobile electronic device 10. In other embodiments, email messages are sent to mobile electronic device 10 after a request is received from the device 10. As known in the art, an email message 324 will often include a text message 314 packaged using a format such as HTML, which may include special font information for the text message. The message may also include one or more attached files 316.

When adapting the email message 324, the data conversion module adapts the email message to accommodate for the resources, for example channel bandwidth, available on the network 110 or 130 that is to be used for the downlink.

For example, if the downlink network is the slower speed wireless WAN 110, then the size of the email message 324 is pared down to speed up its transmission time. For example, in one embodiment, the attachments 316 are stripped out of the email message. In some embodiments, attachments 316 above a threshold size are striped out, while smaller attachments are kept. In some embodiments, attachments 316 of certain file types are kept while attachments of other file types are stripped out. In some embodiments, formatting information (for example HTML code) and/or font information is stripped out of the text portion 314 of the email message to convert it to a plain text message and reduce its size.

In some embodiments, when the downlink network is the higher speed WLAN 103, the mobile data conversion module 116 leaves the email message text portion 314 unchanged, keeping the formatting and font information. In some embodiments, attachments may be kept in messages sent over WLAN 130. In some other example embodiments, a more limited set of changes may be done for email messages that are transmitted over WLAN 130 than wireless WAN 110. For example, the threshold sizes for deleting attachment files may be higher for WLAN 130 than wireless WAN 110.

Referring again to Figure 3, as indicated in step 310, once the email message has been processed by the data conversion module 116 it is then sent over the appropriate wireless network 110 or 130 to the receiving mobile electronic device 10. As indicated in step 312, device 10 receives the email message where it is saved for viewing through email message viewing software resident on the device 10.

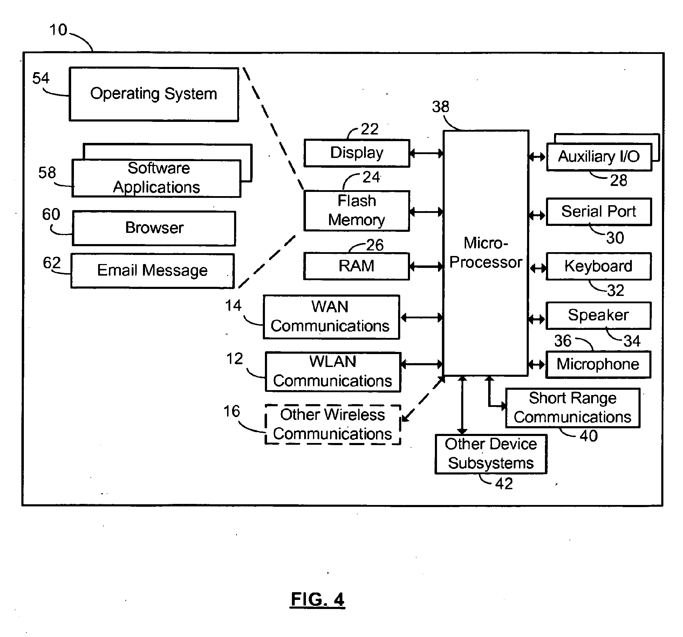

An example of a mobile electronic device 10 with which at least some embodiments of the invention may be used is shown in Figure 4. The device 10 includes wireless WAN communication subsystem 14 for two-way communications with wireless WAN 110, and WLAN communications subsystem 12 for two-way communications with WLAN 130. Communications subsystems 12, 14 in one example each include respective antennas, RF transceivers, and some signal processing capability, implemented for example by a digital signal processor. The device 10 includes a microprocessor 38 that controls the overall operation of the device. The microprocessor 38 interacts with communications subsystems 12 and 14 and also interacts with further device subsystems such as the display 22, flash memory 24, random access memory (RAM) 26, auxiliary input/output (I/O) subsystems 28 (which may include a thumb-wheel, for example), serial port 30 (which may include a USB port, for example), keyboard or keypad 32, speaker 34, microphone 36, a short-range communications subsystem 40, and any other device subsystems generally designated as 42.

Operating system software 54 and various software applications 58 used by the microprocessor 38 are, in one example embodiment, stored in a persistent store such as flash memory 24 or similar storage element. Software applications 58 may include a wide range of applications, including an address book application, a messaging application, a calendar application, and/or a notepad application. One application included among applications 58 in web-enabled embodiments of device 10 is a web browser 60. Another application is an email message viewer 62. Each software application 58 may include layout information defining the placement of particular fields in the user interface for the software application 58, such as text fields, input fields, etc. Those skilled in the art will appreciate that the operating system 54, specific device applications 58, or parts thereof, may be temporarily loaded into a volatile store such as RAM 26. Received communication signals may also be stored to RAM 26.

The microprocessor 38, in addition to its operating system functions, enables execution of software applications 58 (which can include software applications 60 and 62) on the device. A predetermined set of applications 58 which control basic device operations, including at least data and voice communication applications for example, will normally be installed on the device 10 during manufacture. Further applications may also be loaded onto the device 10 through the networks 110 or 130, an auxiliary I/O subsystem 28, serial port 30, short-range communications subsystem 40 or any other suitable subsystem 42, and installed by a user in the RAM 26 or a non-volatile store for execution by the microprocessor 38.

In a data communication mode, a received signal such as an email message or web page download will be processed by the WLAN communication subsystem 12 or the WAN communication subsystem 14 and input to the microprocessor 38, which will preferably further process the received signal for output to the display 22, or alternatively to an auxiliary I/O device 28. A user of device 10 may also compose data items such as email messages for example, using the keyboard 32 in conjunction with the display 22 and possibly an auxiliary I/O device 28. Such composed items may then be transmitted over a communication network through the communication subsystems 110 or 130.

The serial port 30 could be a USB type port implemented in a personal digital assistant (PDA)-type communication device for which synchronization with a user's desktop computer (not shown) may be desirable. Such a port 30 would enable a user to set preferences through an external device or software application and would extend the capabilities of the device by providing for information or software downloads, including user interface information, to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components.

The process and systems disclosed above could also be used with wireless networks other than WLAN and wireless WAN cellular networks. For example, downlink to the device 10 may in some embodiments be carried out through wireless connector system and through a further wireless network such as an orthogonal frequency division multiplex (OFDM) network or a satellite network, and the device 10 may include a further communications subsystem 16 for receiving signals over such network(s), Based on the downlink network capability, downloaded content such as email messages and web pages are adapted in the manner discussed above.

The above-described embodiments of the present application are intended to be examples only. Alterations, modifications and variations may be effected to the particular embodiments by those skilled in the art without departing from the scope of the application, which is defined by the claims appended hereto.

## Claims

1. A method for facilitating the adaptation of data for transmission to a mobile electronic device (10) by a data conversion device (116) in a wireless connector system (114), said method comprising the steps at said mobile electronic device:
selecting a downlink network from among a plurality of networks (110, 130);
advising said data conversion device (116) of an identity of said downlink network (110, 130);
transmitting, to said wireless connector system (114), a request for content; and
receiving, over said downlink network (110, 130) responsive to said request, a portion of said content, where said portion of said content has been selected by said data conversion device (116) based on said downlink network (110, 130).

2. The method of claim 1 further comprising, before said selecting said downlink network, selecting a candidate network, from among said plurality of networks (110, 130), for communication with said wireless connector system (114).

3. The method of claim 2 further comprising basing said selecting said downlink network on use of said candidate network.

4. The method of claim 1 further comprising basing said selecting said downlink network such that said downlink network has a greatest available bandwidth among said plurality of networks.

5. The method of any one of the preceding claims wherein said plurality of networks includes a cellular wireless wide area network (110) and a wireless local area network (130).

6. A mobile electronic device (10) comprising:
a first network subsystem for facilitating communication over a first wireless network (110);
a second network subsystem for facilitating communication over a second wireless network (130);
a processor adapted to:
select a downlink network from among said first wireless network (110) and said second wireless network (130);
advise a data conversion device (116) of an identity of said downlink network (110, 130);
use one of said first wireless network (110) and said second wireless network (130) to transmit, to a wireless connector system (114), a request for content; and
receive, over said downlink network (110, 130) responsive to said request, a portion of said content, where said portion of said content has been selected by said data conversion device (116) based on said downlink network (110, 130).

7. The mobile electronic device (10) of claim 6 wherein said first wireless network comprises a cellular wireless wide area network (110).

8. The mobile electronic device (10) of claim 6 or claim 7 wherein said second wireless network comprises a wireless local area network (130).

9. A computer readable medium storing program code executable by a processor of a computing device; said program code when being executed causing said computing device to perform all the steps of the method of any one of claims 1 to 6.

10. A method of transmitting adapted data from a data conversion device (116) in a wireless connector system (114) to a mobile electronic device (10), said method comprising the steps at the data conversion device (116) of:
receiving a selection of a downlink network from among a plurality of networks (110, 130) from the mobile electronic device (10), said selection advising of an identity of said downlink network (110, 130);
receiving a request for content from said mobile electronic device (10);
selecting a portion of said content based on said downlink network (110, 130); and
transmitting said selected portion of content to said mobile electronic device (10), over said downlink network (110, 130) responsive to said received request.

11. A data conversion device (116) in a wireless connector system (114) for transmitting adapted data to a mobile electronic device (10), said data conversion device (116) comprising:
means for receiving a selection of a downlink network from among a plurality of networks (110, 130) from the mobile electronic device (10), said selection advising of an identity of said downlink network (110, 130);
means for receiving a request for content from said mobile electronic device (10);
means for selecting a portion of said content based on said downlink network (110, 130); and
means for transmitting said selected portion of content to said mobile electronic device (10), over said downlink network (110, 130) responsive to said received request.

12. A computer readable medium storing program code executable by a processor of a computing device, said program code when being executed causing said computing device to perform all the steps of the method of claim 10.

## Patentansprüche

1. Verfahren zum Erleichtern der Anpassung von Daten zur Übertragung zu einer mobilen elektronischen Vorrichtung (10) mittels einer Datenumwandlungsvorrichtung (116) in einem drahtlosen Verbindungssystem (114), wobei das Verfahren folgende Schritte an der mobilen elektronischen Vorrichtung umfasst:
Auswählen eines Abwärtsstreckennetzwerks aus einer Vielzahl von Netzwerken (110, 130);
Informieren der Datenumwandlungsvorrichtung (116) über eine Identität des Abwärtsstreckennetzwerks (110, 130);
Übertragen einer Anfrage nach Inhalten zu dem drahtlosen Verbindungssystem (114); und
Empfangen eines Teils der Inhalte über das Abwärtsstreckennetzwerk (110, 130), das auf die Anfrage reagiert, wobei der Teil der Inhalte basierend auf dem Abwärtsstreckennetzwerk (110, 130) von der Datenumwandlungsvorrichtung (116) ausgewählt wurde.

2. Verfahren nach Anspruch 1, das vor der Auswahl des Abwärtsstreckennetzwerks des Weiteren die Auswahl eines Kandidatennetzwerks aus der Vielzahl von Netzwerken (110, 130) zur Kommunikation mit dem drahtlosen Verbindungssystem (114) umfasst.

3. Verfahren nach Anspruch 2, das des Weiteren das Basieren der Auswahl des Abwärtsstreckennetzwerks auf der Nutzung des Kandidatennetzwerks umfasst.

4. Verfahren nach Anspruch 1, das des Weiteren das Basieren der Auswahl des Abwärtsstreckennetzwerks in einer Weise umfasst, dass das Abwärtsstreckennetzwerk eine größte verfügbare Bandbreite unter der Vielzahl von Netzwerken aufweist.

5. Verfahren nach einem der vorhergehenden Ansprüche, wobei die Vielzahl von Netzwerken ein drahtloses Mobilfunkfemnetz (110) und ein drahtloses Lokalnetz (130) umfasst.

6. Mobile elektronische Vorrichtung (10), die Folgendes umfasst:
ein erstes Netzwerksubsystem zur Erleichterung der Kommunikation über ein erstes drahtloses Netzwerk (110);
ein zweites Netzwerksubsystem zur Erleichterung der Kommunikation über ein zweites drahtloses Netzwerk (130);
einen Prozessor, der für Folgendes ausgelegt ist:
Auswählen eines Abwärtsstreckennetzwerks aus dem ersten drahtlosen Netzwerk (110) und dem zweiten drahtlosen Netzwerk (130);
Informieren einer Datenumwandlungsvorrichtung (116) über eine Identität des Abwärtsstreckennetzwerks (110, 130);
Verwenden des ersten drahtlosen Netzwerks (110) oder des zweiten drahtlosen Netzwerks (130) zum Übertragen einer Anfrage nach Inhalten zu einem drahtlosen Verbindungssystem (114); und
Empfangen eines Teils der Inhalte über das Abwärtsstreckennetzwerk (110, 130), das auf die Anfrage reagiert, wobei der Teil der Inhalte von der Datenumwandlungsvorrichtung (116) basierend auf dem Abwärtsstreckennetzwerk (110, 130) ausgewählt wurde.

7. Mobile elektronische Vorrichtung (10) nach Anspruch 6, wobei das erste drahtlose Netzwerk ein drahtloses Mobilfunkfemnetz (110) umfasst.

8. Mobile elektronische Vorrichtung (10) nach Anspruch 6 oder Anspruch 7, wobei das zweite drahtlose Netzwerk ein drahtloses Lokalnetz (130) umfasst.

9. Computerlesbares Medium, das Programmcode speichert, der von einem Prozessor einer Computervorrichtung ausgeführt werden kann, wobei der Programmcode, wenn er ausgeführt wird, die Computervorrichtung dazu veranlasst, alle Schritte des Verfahrens nach einem der Ansprüche 1 bis 6 durchzuführen.

10. Verfahren der Übertragung von angepassten Daten von einer Datenumwandlungsvorrichtung (116) in einem drahtlosen Verbindungssystem (114) zu einer mobilen elektronischen Vorrichtung (10), wobei das Verfahren an der Datenumwandlungsvorrichtung (116) folgende Schritte umfasst:
Empfangen einer Auswahl eines Abwärtsstreckennetzwerks aus einer Vielzahl von Netzwerken (110, 130) von der mobilen elektronischen Vorrichtung (10), wobei die Auswahl über eine Identität des Abwärtsstreckennetzwerks (110, 130) informiert;
Empfangen einer Anfrage nach Inhalten von der mobilen elektronischen Vorrichtung (10);
Auswählen eines Teils der Inhalte basierend auf dem Abwärtsstreckennetzwerk (110, 130); und
Übertragen des ausgewählten Teils der Inhalte zu der mobilen elektronischen Vorrichtung (10) über das Abwärtsstreckennetzwerk (110, 130), das auf die empfangene Anfrage reagiert.

11. Datenumwandlungsvorrichtung (116) in einem drahtlosen Verbindungssystem (114) zur Übertragung von angepassten Daten zu einer mobilen elektronischen Vorrichtung (10), wobei die Datenumwandlungsvorrichtung (116) Folgendes umfasst:
Mittel zum Empfangen einer Auswahl eines Abwärtsstreckennetzwerks aus einer Vielzahl von Netzwerken (110, 130) von der mobilen elektronischen Vorrichtung (10), wobei die Auswahl über eine Identität des Abwärtsstreckennetzwerks (110, 130) informiert;
Mittel zum Empfangen einer Anfrage nach Inhalten von der mobilen elektronischen Vorrichtung (10);
Mittel zum Auswählen eines Teils der Inhalte basierend auf dem Abwärtsstreckennetzwerk (110, 130); und
Mittel zum Übertragen des ausgewählten Teils der Inhalte zu der mobilen elektronischen Vorrichtung (10) über das Abwärtsstreckennetzwerk (110, 130), das auf die empfangene Anfrage reagiert.

12. Computerlesbares Medium, das Programmcode speichert, der von einem Prozessor einer Computervorrichtung ausgeführt werden kann, wobei der Programmcode, wenn er ausgeführt wird, die Computervorrichtung dazu veranlasst, alle Schritte des Verfahrens von Anspruch 10 durchzuführen.

## Revendications

1. Un procédé destiné à faciliter l'adaptation de données pour une transmission vers un dispositif électronique mobile (10) par un dispositif de conversion de données (116) dans un système connecteur sans fil (114), ledit procédé comprenant les opérations suivantes sur ledit dispositif électronique mobile :
la sélection d'un réseau en liaison descendante dans une pluralité de réseaux (110, 130),
la notification audit dispositif de conversion de données (116) d'une identité dudit réseau en liaison descendante (110, 130),
la transmission audit système connecteur sans fil (114) d'une demande de contenu, et
la réception, par ledit réseau en liaison descendante (110, 130) en réponse à ladite demande, d'une partie dudit contenu, où ladite partie dudit contenu a été sélectionnée par ledit dispositif de conversion de données (116) en fonction dudit réseau en liaison descendante (110, 130).

2. Le procédé selon la revendication 1 comprenant en outre, avant ladite sélection dudit réseau en liaison descendante, la sélection d'un réseau candidat, dans ladite pluralité de réseaux (110, 130), pour une communication avec ledit système connecteur sans fil (114).

3. Le procédé selon la revendication 2 comprenant en outre le choix de ladite sélection dudit réseau en liaison descendante selon l'utilisation dudit réseau candidat.

4. Le procédé selon la revendication 1 comprenant en outre le choix de ladite sélection dudit réseau en liaison descendante de sorte que le réseau en liaison descendante possède une bande passante disponible la plus grande de ladite pluralité de réseaux.

5. Le procédé selon l'une quelconque des revendications précédentes où ladite pluralité de réseaux comprend un réseau étendu sans fil cellulaire (110) et un réseau local sans fil (130).

6. Un dispositif électronique mobile (10) comprenant :
un premier sous-système de réseau destiné à faciliter la communication sur un premier réseau sans fil (110),
un deuxième sous-système de réseau destiné à faciliter la communication sur un deuxième réseau sans fil (130),
un processeur adapté de façon à :
sélectionner un réseau en liaison descendante parmi ledit premier réseau sans fil (110) et ledit deuxième réseau sans fil (130),
notifier un dispositif de conversion de données (116) d'une identité dudit réseau en liaison descendante (110, 130),
utiliser l'un desdits premier réseau sans fil (110) et deuxième réseau sans fil (130) pour transmettre à un système connecteur sans fil (114) une demande de contenu, et
recevoir, par ledit réseau en liaison descendante (110, 130) en réponse à ladite demande, une partie dudit contenu, où ladite partie dudit contenu a été sélectionnée par ledit dispositif de conversion de données (116) en fonction dudit réseau en liaison descendante (110, 130).

7. Le dispositif électronique mobile (10) selon la revendication 6 où ledit premier réseau sans fil comprend un réseau étendu sans fil cellulaire (110).

8. Le dispositif électronique mobile (10) selon la revendication 6 ou 7 où ledit deuxième réseau sans fil comprend un réseau local sans fil (130).

9. Un support lisible par ordinateur contenant du code de programme exécutable par un processeur d'un dispositif informatique, ledit code de programme lorsqu'il est exécuté amenant ledit dispositif informatique à exécuter toutes les opérations du procédé selon l'une quelconque des revendications 1 à 6.

10. Un procédé de transmission de données adaptées à partir d'un dispositif de conversion de données (116) dans un système connecteur sans fil (114) vers un dispositif électronique mobile (10), ledit procédé comprenant les opérations suivantes sur le dispositif de conversion de données (116) :
la réception d'une sélection d'un réseau en liaison descendante dans une pluralité de réseaux (110, 130) provenant du dispositif électronique mobile (10), ladite sélection notifiant une identité dudit réseau en liaison descendante (110, 130),
la réception d'une demande de contenu provenant dudit dispositif électronique mobile (10),
la sélection d'une partie dudit contenu en fonction dudit réseau en liaison descendante (110, 130), et
la transmission de ladite partie de contenu sélectionnée vers ledit dispositif électronique mobile (10), par ledit réseau en liaison descendante (110, 130) en réponse à ladite demande reçue.

11. Un dispositif de conversion de données (116) dans un système connecteur sans fil (114) destiné à transmettre des données adaptées à un dispositif électronique mobile (10), ledit dispositif de conversion de données (116) comprenant :
un moyen de recevoir une sélection d'un réseau en liaison descendante dans une pluralité de réseaux (110, 130) provenant du dispositif électronique mobile (10), ladite sélection notifiant une identité dudit réseau en liaison descendante (110, 130),
un moyen de recevoir une demande de contenu provenant dudit dispositif électronique mobile (10),
un moyen de sélectionner une partie dudit contenu en fonction dudit réseau en liaison descendante (110, 130), et
un moyen de transmettre ladite partie de contenu sélectionnée vers ledit dispositif électronique mobile (10), par ledit réseau en liaison descendante (110, 130) en réponse à ladite demande reçue.

12. Un support lisible par ordinateur contenant du code de programme exécutable par un processeur d'un dispositif informatique, ledit code de programme lorsqu'il est exécuté amenant ledit dispositif informatique à exécuter toutes les opérations du procédé selon la revendication 10.
